# FASCICULE DE BREVET EUROPEEN

(11) **EP 0 685 802 B1**
(45) Date de publication et mention de la délivrance du brevet: **26.09.2001**
(21) Numéro de dépôt: 95401252.2
(22) Date de dépôt: 30.05.1995
(51) Int. Cl.: G06F 17/30

(54) **Système d'information pour la consultation d'informations centralisées en provenance d'applications opérationnelles**
Informationssystem zur Abfrage von aus betrieblichen Applikationen stammenden zentralisierten Informationen
Information system for consulting centralized information originating from operational applications

(30) Priorité: 02.06.1994 FR 9406738
(43) Date de publication de la demande: 06.12.1995
(73) Titulaire: BULL S.A., 78430 Louveciennes (FR)
(72) Inventeur: Entressangle, Gabriel, F-38320 Brie et Angonnes (FR); Dalle Rive, Jean, F-38240 Meylan (FR); Paoli, Claude, F-38190 Villard Bonnot (FR)
(74) Mandataire: Debay, Yves

(56) Documents cités:
- EP-A- 0 425 222
- US-A- 4 774 661
- COMPUTER COMMUNICATIONS., vol. 15, no. 4, Mai 1992 LONDRES GB, pages 270-278, M. KAMEL & N. KAMEL : 'Federated database management system : Requirements, issues and solutions'
- 9TH INTERNATIONAL CONFERENCE ON COMPUTERS AND COMMUNICATIONS, 21 Mars 1990 SCOTTSDALE, USA, pages 706-713, C. BATINI ET AL : 'A methodology for the design of data dictionaries'

## Description

La présente invention concerne un système d'information pour la consultation d'informations centralisées en provenance d'applications opérationnelles, composé d'un serveur et d'une pluralité de micro-ordinateurs émettant des requêtes vers le serveur qui comporte d'une part des données stockées sous forme de fichiers et d'autre part un métadictionnaire élaboré autour d'une pluralité de tables propres à la documentation et à l'administration du système.

De manière générale, dans une même entreprise il peut être disposé de plusieurs applications opérationnelles situées sur des sites et des systèmes différents. Pour permettre la consultation d'informations centralisées en provenance desdites applications opérationnelles un système d'information doit être alors utilisé. Un tel système est habituellement composé d'au moins deux éléments fondamentaux : un serveur appelé aussi base de données et un ou plusieurs micro-ordinateurs émettant des requêtes vers le serveur, chaque micro-ordinateur présentant pour la consultation par l'utilisateur une interface graphique appelée aussi frontal graphique. Le serveur ou base de données peut être défini comme un ensemble intégré de données modélisant un univers déterminé et pour éviter les problèmes de duplication, les données utilisées par les diverses applications sont donc regroupées dans ce même serveur. Un tel serveur ou base de données contient des objets du monde réel et des associations entre ces objets. Pour des raisons de simplicité de représentation des données et afin de permettre une meilleure productivité des développeurs et utilisateurs le modèle de données relationnel est couramment utilisé car il permet une représentation tabulaire aussi bien des objets que des associations entre objets. Dans ce cas une base de données relationnelle se présente comme un ensemble de relations d'où le nom du modèle, ces relations étant aussi appelées tables. Outre la simplicité et l'amélioration des performances, la normalisation du langage SQL, facile d'utilisation, a contribué à la prolifération des bases de données relationnelles. Le serveur est généralement divisé en deux parties : les données et le métadictionnaire appelé également méta-base ou dictionnaire de données. La partie données est stockée physiquement dans la base sous forme de fichiers. La partie métadictionnaire élaborée autour d'une pluralité de tables propres à la documentation et à l'administration du système décrit dynamiquement la base de données, son contenu reflétant une image de la base à tout instant. Le métadictionnaire permet ainsi de décrire en particulier les objets de bases, les utilisateurs du système, les privilèges et les droits des utilisateurs sur les différents objets. De ce fait le contenu du métadictionnaire constitue un ensemble d'informations qui évolue avec l'utilisation de la base de données. Ainsi toute opération qui affecte la structure de la base de données provoque automatiquement une mise à jour du dictionnaire. une telle description de l'ensemble des objets gérés dans le métadictionnaire rend possible une manipulation intégrée à l'aide d'un même langage, habituellement SQL, aussi bien des données que de leurs structures.

Le document US 4,774,661 divulgue un système de gestion d'une base de données disposant d'un dictionnaire de données actif accessible et modifiable par l'utilisateur, comme celui décrit plus haut. Ce dictionnaire a été ajouté pour résoudre le problème lié au fait que les données stockées par le système sous un format et une forme dictés par l'architecture du système, sont accessibles seulement en interrogeant le système d'une manière cohérente avec cette forme et ce format de données.

Cependant un tel système d'information présente divers inconvénients. En effet le dictionnaire de données est bâti directement sur la structuration des tables, il est donc déduit des tables, et ne permet pas ainsi de créer d'abstraction, c'est-à-dire des liens avec le profil de l'utilisateur. L'utilisateur de l'interface doit connaître, en outre, la structure des données ainsi que le langage SQL. Enfin, dans ce contexte, le délai d'intégration d'une application, entre la définition du cahier des charges et la possibilité d'utilisation dans la base de la dite application, est en général excessivement long.

La présente invention a pour but de remédier aux inconvénients précités et propose un système d'information qui permet une intégration rapide des applications, qui autorise une analyse des données structurante et présente pour l'utilisateur une grande facilité et un grand confort d'emploi.

Pour cela, le système d'information pour la consultation d'informations centralisées en provenance d'applications opérationnelles mentionné dans le préambule est remarquable en ce que les données sont organisées en domaines, sous-domaines et fonctions et sont analysées selon un processus logique contenu dans le métadictionnaire matérialisé au moyen d'axes et d'indicateurs décrivant les applications, processus qui permet au moment de la définition des données à importer dans le serveur, de créer, en plus des tables contenant les données, des tables complémentaires dites de consolidation pour autoriser une réponse générique à l'ensemble des requêtes effectuées sur les données, et optimiser les performances d'accès.

De manière avantageuse et contre toute attente dans une application concernant une base de données relationnelle, la notion de domaines, sous-domaines, axes et indicateurs utilisée ordinairement dans des spécifications écrites sur du papier a pu être concrétisée, par l'intermédiaire du métadictionnaire, en une interface générique correspondant à cette notion.

Ainsi selon l'idée de l'invention, les données organisées en domaines, sous-domaines et fonctions sont chargées dans la base de données sur laquelle l'utilisateur a, à partir de son poste d'interrogation, une vue fonctionnelle à travers un métadictionnaire qui décrit les applications et permet une consolidation en terme d'axes et d'indicateurs et qui présente un caractère de haute généricité. L'accès en consultation se faisant par domaines et sous-domaines permet de guider l'utilisateur jusqu'au niveau correspondant aux données désirées. Les axes permettent d'analyser des quantités selon des critères prédéterminés et les indicateurs sont les valeurs mesurables auxquelles l'utilisateur s'intéresse. La sélection d'axes et d'indicateurs permet la composition automatique de requêtes appelées dans ce cas requêtes personnelles, requêtes qui peuvent être cataloguées et rappelées à tout moment, tout comme les requêtes communes offertes dès l'origine à l'utilisateur. Le concept axes et indicateurs permet, de manière simple, de construire des requêtes traduisant au mieux les questions désirées posées. Ce système dynamique est capable, en fonction du choix de l'utilisateur et grâce au métadictionnaire de retrouver, d'adresser directement la table de consolidation optimale. Contrairement au système de l'art antérieur c'est le métadictionnaire qui configure et régit le comportement de la base et de l'utilisateur de cette base. Les tables de consolidation sont déduites et créées à partir du métadictionnaire. Il est aisé de décrire une application et quand il est désiré intégrer une nouvelle application, cette dernière est rattachée aux domaines et sous-domaines prédéterminés, ensuite il suffit de la décrire en terme d'axes, d'indicateurs et de niveaux de préconsolidation pour qu'elle soit automatiquement prise en compte par le système. En fait, les tables correspondant à l'application sont construites et le serveur (ou la base) est enrichi de ces tables grâce au métadictionnaire en définissant des axes et de indicateurs. Le métadictionnaire est un moteur pour la configuration du serveur et pour l'optimisation des requêtes et offre un caractère de multidimensionnalité. L'application est alors vue, par l'intermédiaire de l'interface graphique, suivant toutes ses dimensions. Il est, en outre, présenté un haut niveau de "sécurisation" car l'utilisateur voit ses droits d'accès administrés de manière très rigoureuse jusqu'au niveau de la valeur d'un indicateur. Enfin, outre le caractère de haute généricité très favorable à l'utilisateur, il appert que la connaissance de la structure des données et du langage SQL ne sont pas nécessaires à ce dernier pour utiliser l'interface graphique. Les requêtes sont considérablement plus aisées à formuler et les performances d'accès significativement optimisées.

Dans ce système d'information, de manière remarquable un axe correspond à une dimension d'analyse pour une fonction, chaque axe étant découpé en niveaux permettant d'obtenir une maille d'information souhaitée, alors qu'un indicateur est la mesure de la maille d'information définie après le choix des axes et des niveaux, l'indicateur choisi étant alors analysé le long des axes prédéfinis, son contenu représentant la mesure de l'information requise.

De même, de manière caractéristique, le métadictionnaire comprend, les tables propres à chaque application, les informations générales concernant la gestion des domaines et des sous-domaines ainsi que la gestion des axes et des indicateurs, les informations liées au chargement et au transfert des applications, les éléments nécessaires à la construction automatique des requêtes de consultation, la gestion des utilisateurs et les droits des utilisateurs.

Egalement, avantageusement, dans le système d'information, sur chaque micro-ordinateur il est présenté une interface graphique unique pour l'interrogation par l'utilisateur qui s'adapte automatiquement à tout type de données vues au travers du métadictionnaire et donc à la fonction choisie en présentant les axes et indicateur(s) accessibles, le métadictionnaire assurant l'interface entre une requête exprimée en termes de domaines, sous-domaines, axes, niveaux et indicateurs et l'ensemble des données contenues dans le serveur.

Ainsi, chaque utilisateur peut, grâce à l'invention, accéder aux informations nécessaires au pilotage dans son domaine d'activités. Les données sont fiables car extraites directement des systèmes opérants, toute application pouvant être aisément intégrée dans un tel système. Pour une utilisation confortable, des tableaux de bord (par exemple réalisés avec Excel, marque déposée par Microsoft Corporation) sont automatiquement créés à partir des données du système pour faciliter l'accès et l'exploitation dudit système par l'utilisateur. L'utilisateur accède ainsi à toutes les fonctionnalités présentes dans le système à partir des mêmes écrans de présentation. L'utilisateur est guidé en permanence, toutes les sélections et commandes étant réalisées via l'interface graphique, il dispose à tout instant d'une aide en ligne globale et contextuelle. L'interface graphique peut être assimilée à un frontal graphique intelligent pour les différentes applications gérées par différentes bases de données.

De manière avantageuse, grâce à la puissance de la représentation en axes et indicateurs et la structure d'axe hiérarchisée en niveaux le système d'information selon l'invention est remarquable en ce qu'il permet de construire dynamiquement un axe minimal commun par union d'au moins deux axes après comparaison et détection d'équivalence de niveaux des au moins deux axes autorisant ainsi des interrogations transversales au travers de domaines différents pour l'analyse de différents indicateurs par rapport aux différents axes communs auxdits différents indicateurs choisis eux-mêmes appartenant auxdits domaines différents.

Ainsi est introduite une notion de transversalité et de traduction d'axes qui permet de réaliser le rapprochement de différents indicateurs propres à différentes applications et donc le rapprochement d'informations en provenance d'applications différentes à partir de la construction d'un axe minimal commun déduit de divers axes identiques. Lorsque des niveaux équivalents sont reconnus sur ces axes, c'est-à-dire tant que la structure ne change pas, il est alors possible de générer automatiquement une application transversale. Une seule requête est alors nécessaire pour obtenir des informations désirées propres aux différentes applications et ceci sans connaître intimement lesdites applications, alors que dans l'art antérieur un nombre de requêtes équivalant au nombre d'applications données était nécessaire. Pour l'utilisateur, il n'est donc pas utile de connaître intimement lesdites applications, une fois l'axe commun construit et visualisé, il suffit de s'intéresser aux indicateurs.

De manière préférée, le procédé d'intégration d'une application opérationnelle dans le système d'information conforme à l'invention peut être décomposé selon les étapes suivantes :
- identification du système opérant ou de la base opérationnelle amont avec prise de connaissance de l'administrateur et des droits des utilisateurs,
- identification des besoins et du type de requête des utilisateurs du système opérant,
- détermination des domaines, sous-domaines, axes (chaque niveau d'axe représentant la maille de l'information désirée à analyser), indicateurs (mesure de la maille) et des règles de consolidation,
- préparation du serveur
   . tables réceptrices des données amont du système opérant,
   . enrichissement du métadictionnaire relativement au profil de l'utilisateur (droits d'accès) et à la définition des axes et des indicateurs,
   . construction des tables de consolidation selon les règles de consolidation.

La description suivante, donnée à titre d'exemple non limitatif, fera bien comprendre comment l'invention peut être réalisée.

Le système d'information a pour objectif d'offrir une vision globale des différents paramètres indispensables pour pouvoir gérer efficacement une pluralité d'applications opérationnelles. Ces paramètres essentiels sont des indicateurs qui peuvent être analysés le long d'axes multiniveaux et sont classés par sous-domaines fonctionnels eux-mêmes regroupés en domaines.

Tout utilisateur ne peut accéder à tous les indicateurs ainsi qu'à tous les niveaux des axes. Chaque utilisateur autorisé à se connecter possède un certain profil qui détermine les indicateurs visibles ainsi que les axes ou portions d'axes en analyse.

L'accès au serveur supportant les données et les traitements est possible à partir de micro-ordinateurs "clients", de type PC, sur lesquels un logiciel applicatif a été chargé. Les micro-ordinateurs doivent être connectés à un réseau qui constitue le lien physique d'accès au serveur. Le monde dans lequel est utilisé le système d'information est constitué d'un ensemble d'objets homogènes organisés en classes et pouvant offrir des vues transversales le long d'axes communs.

Les données permettant la construction des indicateurs sont supportées par des applications dédiées, elles-mêmes gérées par des utilisateurs ayant la connaissance desdites applications. Ces diverses applications sont en général hétérogènes (données, format, système, plate-forme,...) et par conséquent ne peuvent, de manière générale simple, être consolidées ou juxtaposées entre elles. En effet, le monde des applications opérationnelles est peuplé d'applications très performantes, chacune dans son domaine, mais non coopératives entre elles. Chacune d'elles, constitue néanmoins la référence pour les données qu'elle a à supporter.

Des constatations précédentes, il ressort clairement que c'est du monde des applications opérationnelles que vont être extraits les indicateurs et les axes qui, une fois chargés dans le monde du système d'information vont permettre d'avoir une vision globale homogène des différents paramètres exportés à travers les indicateurs.

Ces deux mondes sont donc étroitement liés et il est clair que le monde de référence constitué par les applications opérationnelles doit transmettre au monde de présentation constitué par le système d'information toutes les modifications intervenues et ce, selon un protocole le plus automatique et le plus général possible.

De manière plus détaillée, les traitements effectués à l'intérieur du système d'information peuvent être classés en un certain nombre de phases.

Une première phase consiste en l'extraction des indicateurs et des axes. La machine hôte support de l'application opérationnelle constitue le lieu du traitement et les données de la base support de cette application sont les données d'entrée. Le traitement consiste à présenter les données opérationnelles retenues pour le système d'information sous forme d'indicateurs et d'axes. Il s'agit essentiellement de processus d'agrégation et de consolidation, parfois de traitements plus complexes lorsque sont concernés des indicateurs calculés à partir d'autres données de la base. Plusieurs niveaux sont présentés selon les cas. Des niveaux obligatoires pour l'extraction et la fabrication des indicateurs "primaires" et des axes associés, sous forme d'un fichier spécifié, avec le niveau de consolidation directement accessible sous l'application opérationnelle. Des niveaux facultatifs d'une part pour la préconsolidation des indicateurs selon le niveau minimum requis par le système d'information si ce dernier est supérieur à celui de l'application et d'autre part pour le calcul d'indicateurs dérivés des indicateurs "primaires" et la présentation sous forme standard dans un fichier résultat. Les données de sortie sont stockées dans un fichier texte suivant un format propre au système d'information et commun à toutes les applications entrant dans le système d'information.

Une seconde phase consiste dans le transfert du fichier résultat dans la machine d'accueil du système d'information ( qui est en fait le serveur) dont les données d'entrée proviennent d'un fichier texte propre aux indicateurs et aux axes de la machine hôte. Le traitement est réalisé par la machine d'accueil qui, en fonction d'un calendrier propre à chaque application, prend l'initiative du rapatriement du fichier à condition que celui-ci soit disponible et réputé valide. Ce transfert est automatique, mais l'administrateur du système d'information doit pouvoir disposer d'une procédure manuelle pour les cas particuliers. Les données de sortie sont stockées dans un fichier texte relatif aux indicateurs et aux axes sur la machine d'accueil.

Une troisième phase consiste dans la vérification du fichier résultat dans la machine d'accueil du système d'information. Les données d'entrée sont sur la machine d'accueil dans le fichier texte propre aux indicateurs et aux axes et contiennent les critères de vérification dans la base de données ou métadictionnaire, le traitement consistant donc en la vérification des données entrantes. Les données de sortie intéressent le fichier ainsi vérifié, le compte rendu de cette vérification, le journal des rejets et la mise à jour du métadictionnaire.

La quatrième phase est relative au chargement dans le serveur. les données d'entrée sont dans le fichier texte propre aux indicateurs et aux axes et concernent les tables dans leur dernier état. Les axes et la table de consolidation sont chargés et les identifiants externes sont traduits en identifiants internes. Les données de sortie intéressent les tables actualisées, le compte rendu du chargement, le journal des rejets et la mise à jour du métadictionnaire.

La cinquième phase consiste en "l'historisation" (rangement et mise à jour des informations) dans le serveur. Les tables de base chargées ainsi que les paramètres d'historisation dans le métadictionnaire forment les données d'entrée. Lors du traitement les informations les moins récentes sont compactées alors que les informations périmées sont archivées ou supprimées. Les données de sortie comportent la table historisée, le compte rendu d'historisation, le journal des anomalies, des suppressions et de l'archivage et la mise à jour du métadictionnaire.

La sixième phase concerne les calculs et les préconsolidations dans le serveur. La table de base historisée et les paramètres de calcul et/ou de préconsolidation constituent les données d'entrée alors que le traitement dans cette phase est relatif au calcul des indicateurs secondaires et aux consolidations multiniveaux. Les données de sortie intéressent la table de base complétée par les indicateurs calculés, les tables de préconsolidation, la mise à jour du métadictionnaire, le compte rendu de consolidation et le journal des anomalies.

La septième phase est relative à la connexion au système d'information, connexion par conséquent des différents micro-ordinateurs (clients) et du serveur. Le nom et le mot de passe de l'utilisateur, la table des utilisateurs et les droits afférents auxdits utilisateurs ainsi que le métadictionnaire forment les données d'entrée. Le traitement consiste en la recherche du nom et la vérification du mot de passe de l'utilisateur ainsi qu'en la sélection des indicateurs et du profil utilisateur. Les données de sortie concernent le compte rendu de connexion, la liste des indicateurs autorisés, le profil de l'utilisateur et l'enregistrement dans le fichier "carnet de bord".

La huitième et dernière phase est spécifique de la fabrication de la requête d'interrogation d'un micro-ordinateur vers le serveur. Les données d'entrée sont constituées par la liste des indicateurs et des niveaux sur les axes ainsi que par le métadictionnaire et le traitement consiste en la recherche des identifiants propres aux axes et aux indicateurs de même qu'en la recherche de la table de consolidation optimale. Les données de sortie concernent le nom de la table de consolidation optimale.

La présente invention permet de répondre à l'attente des développeurs et des utilisateurs en posant et tirant parti des principes suivants :
- apport d'une grande généricité, tout développement est réutilisable ou paramétrable, et rendu totalement indépendant de l'application opérationnelle source, une fois les paramètres chargés,
- construction des indicateurs et des axes le plus en amont possible,
- fourniture des indicateurs et des axes à partir de fichiers d'entrée construits sur le même schéma et "auto-décrits",
- conception du système d'information telle qu'elle permet d'aller chercher les informations sur le site central, tout en préservant d'une part les performances et en évitant d'autre part tout changement de la partie "client" sur un micro-ordinateur.

Il est à présent proposé une architecture générale des données permettant de les classifier. Ainsi, les données manipulées par le système d'information peuvent se répartir en trois classes :
- les données liées à la sécurité autorisant le contrôle de l'accès aux données propres à l'application,
- le métadictionnaire contenant la description des données manipulées ainsi que les liens entre elles, métadictionnaire qui est la base du mécanisme de généricité,
- les données propres à l'application, support des indicateurs et des axes,

Dans un souci d'efficacité et de cohérence, il est également proposé une méthodologie selon laquelle les règles suivantes, concernant les données et les traitements, sont à respecter :
- les noms des tables et des champs doivent être aussi explicites que possible tout en gardant une longueur raisonnable,
- des noms juxtaposés utilisés pour une désignation doivent être séparés par un caractère de soulignement (appelé "underscore" par l'homme du métier),
- les noms des attributs désignant la même propriété, pour les diverses entités, doivent être identiques,
- toute entité du métadictionnaire doit posséder un identifiant unique interne de nature numérique pour accélérer les jointures (rapprochements entre des données se trouvant dans des tables différentes), tous les identifiants commençant par une même séquence de caractères.

Le serveur comporte d'une part les données de base supportant les informations destinées à être analysées et d'autre part la métadictionnaire.

Les données de base se divisent en deux catégories :
- les axes qui sont des objets hiérarchisés représentant les points de vue selon lesquels il est désiré analyser les indicateurs,
- les tables de consolidation qui supportent les valeurs d'un ou plusieurs indicateurs selon un ou plusieurs axes.

Une application opérationnelle est décrite pour le système d'information en terme d'axes et en général une table de consolidation d'indicateurs selon ces axes. Dans le système d'information, il est possible, lors de la phase de chargement, de générer d'autres tables de consolidation à partir de ces données de base pour des niveaux supérieurs de certains axes, ceci permettant d'améliorer les performances en consultation.

Afin de faciliter le processus de recherche de la table de consolidation adéquate, le nommage des tables de consolidation est le suivant:
- une partie "racine" identifiant l'application d'origine,
- une partie "suffixe" composée d'un caractère de soulignement ("underscore") et d'un nombre repérant le niveau de consolidation, la table de base comportant les niveaux les plus fins ayant pour suffixe "_0", pour les autres tables le nombre du suffixe est incrémenté en fonction du niveau de consolidation.

En ce qui concerne le format des tables, pour chaque application opérationnelle il existe :
- une table par axe : T_AXE.....
   - IDLEV: identifiant de l'élément de niveau de l'axe
   - NOM: désignation de l'élément de niveau de l'axe
   - LEVEL niveau hiérarchique
   - IDLEVH identifiant de l'élément de rattachement
   - FLAGV validité du niveau
- n tables de consolidation RACINE_X:
   - VALIND1: valeur indicateur 1
   - VALIND2: valeur indicateur 2
      .................
   - IDLEV_AXE1: identifiant de l'élément de niveau de l'axe 1
   - IDLEV_AXE2: identifiant de l'élément de niveau de l'axe 2

Le métadictionnaire quant à lui, contient, dans les tables la description des données de base ainsi que les mécanismes permettant la généricité de l'applicatif. Dans le métadictionnaire il est trouvé :
- la table des applications opérationnelles TAB_APPLIS:
   - IDAPPLI: identifiant de l'application
   - NOM: désignation de l'application
   - IDSUBDOMAIN: identifiant du sous-domaine de rattachement
   - HOST: machine support de l'application (Nom IP)
   - FIC_INPUT: nom du fichier d'entrée sur le système hôte
   - FIC_CHAR: nom du fichier d'entrée sur le système de chargement /consolidation
   - CALENDAR: calendrier de récupération des données
   - IDADMIN: identifiant de l'admistrateur pour le système d'information
   - IDCHAR_V: identifiant du chargement valide dans le métadictionnaire
   - IDTR_V: identifiant du transfert valide dans le métadictionnaire
   - FLAGV: drapeau de validité
- la table de gestion des transferts TAB_TRANS:
   - IDTR: identifiant du transfert
   - IDAPPLI: identifiant de l'application
   - DATE_TR: date d'exécution du transfert
   - VER_TR: version du transfert (pour plusieurs tentatives)
   - STATUS: état du transfert (impossible, en cours, OK,NOK,..)
   - CR_TR: compte rendu sommaire du transfert
   - FIC_CR: nom du fichier de compte rendu
- la table de gestion des chargements :
   - IDCHAR: identifiant du chargement
   - IDAPPLI: identifiant de l'application
   - DATE_CHAR: date d'exécution du chargement
   - VER_CHAR: version du chargement (pour plusieurs tentatives)

   - DATE_DON: date des données chargées
   - VER_DON: version des données chargées
   - STATUS: état du chargement (impossible, en cours, OK, NOK,..)

   - CR_CHAR: compte rendu sommaire de chargement
   - FIC_CR: nom du fichier de compte rendu
- la table de description des indicateurs TABIND
   - IDIND: identifiant de l'indicateur
   - CODIND: code de l'identificateur pour l'application
   - NOM: désignation de l'indicateur
   - IDAPPLI: identifiant de l'application de rattachement
   - UNITE: unité
   - TYP_DATA: type de données (alpha, numérique, date,...)
   - FORMAT: format de la donnée (fonction du type)
   - SEUIL_H: valeur seuil haut
   - SEUIL_B: valeur seuil bas
   - TYPIND: type d'indicateur (primaire, calculé, transverse)
   - TYP_CUMUL: fonction à utiliser pour la consolidation
   - TAB_RACINE: racine du nom de la table contenant la donnée
   - CHAMP: nom du champ de la table support contenant la valeur
   - TYP_HISTO type "d'historisation"
   - FLAGV: drapeau de validité
- la table des tables consolidées TAB_CONSO :
   - IDIND: identifiant de l'indicateur
   - IDAXE: identifiant de l'axe
   - LEV_MIN: niveau le plus fin de l'axe accessible
   - SUFF: suffixe de consolidation à utiliser
- la table des liens Indicateurs/Axes IND_AXE:
   - IDIND: identifiant de l'indicateur
   - IDAXE identifiant de l'axe
   - FLAGV: drapeau de validité

* Cette table peut être une vue des deux premières colonnes de la précédente.
- la table des axes TAB_AXE:
   - IDAXE: identifiant de l'axe
   - NOM: désignation de l'axe
   - NB_NIV: nombre de niveaux
   - TAB_NOM: nom de la table support
   - FLAGV: drapeau de validité
   - TYPE_AXE: type d'axe (direct/traduit)
   - FLAGV: drapeau de validité
- la table des tables de traduction d'axe:
   - IDAXE_ORG: identifiant de l'axe source
   - IDAXE_DEST: identifiant de l'axe destination
   - TAB_TR: table de traduction
   - FLAGV: drapeau de validité
- les tables de traduction TR_XXX_YYY:
   - IDLEV_ORG: identifiant de l'item niveau source
   - IDLEV_DEST: identifiant de l'item niveau destination

Les données relatives à la sécurité sont stockées dans les différentes tables suivantes :
- la table des utilisateurs autorisés : WHOSWHO comportant les champs suivants :
   - NOM PRENOM : caractères majuscules
   - IDPERS: identifiant utilisateur
   - IDORG: identifiant de l'item d'organisation de rattachement
   - TEL: téléphone
   - MAIL: messagerie
   - CLE: mot de passe crypté (longueur fonction du "process" de cryptage)

   - DATECLE: date du changement de clé
   - EDA_HOST: nom du serveur de données
   - EDA_LOGIN: login d'accès au serveur EDA
   - EDA-PASSWD: mot de passe accès serveur EDA
   - EDA PROFILE: profil EDA de rattachement de l'utilisateur
   - IDMETIER: identifiant du métier de rattachement
   - FLAGV: drapeau de validité de l'entrée dans la table (1: Valide;0 périmé)
- la table des domaines DOMAIN:
   - IDDOMAIN: identifiant du domaine
   - NOM: désignation du domaine
   - FLAGV: drapeau de validité de l'entrée dans la table (1: Valide;0 périmé)
- la table des sous-domaines ou fonctions SUBDOMAIN:
   - IDSUBDOMAIN: identifiant du sous-domaine
   - NOM: désignation du sous-domaine
   - IDDOMAIN: identifiant du domaine de rattachement
   - FLAGV: drapeau de validité de l'entrée dans la table (1: Valide;0 périmé)
- la table utilisateur/indicateurs accessibles : IND_USER:
   - IDIND: identifiant de l'indicateur
   - IDPERS: identifiant de l'utilisateur
- la table utilisateur/axes autorisés : AXE_USER:
   - IDPERS identifiant de l'utilisateur
   - IDAXE: identifiant de l'axe
   - LEVMAX: niveau maxi de l'axe autorisé
   - IDLISTAUT: identifiant de la liste des valeurs autorisées sur le niveau maxi
- la table LISTAUT contenant les listes d'autorisation sur les niveaux des axes :
   - IDLISTAUT: identifiant de la liste des valeurs autorisées sur le niveau maxi
   - IDLEVAXE: identifiant du niveau autorisé

Différents traitements ont à utiliser les données précédemment décrites. Ainsi le traitement de transfert qui se trouve à la frontière du monde des applications opérationnelles et du monde du système d'information et dont l'objet de base est l'application opérationnelle :
- scrutation quotidienne de la table des applications pour déterminer, à partir des informations CALENDAR, les applications dont il faut déclencher le transfert,
- transfert du fichier FIC-INPUT de la machine HOST dans FIC_CHAR avec gestion du STATUS, des comptes rendus CR_TR et FIC_TR, de DATE_TR et VER_TR,
- pendant le processus de transfert consultation uniquement par l'administrateur dédié IDADMIN,
- rangement du IDTR réussi dans IDTR_V de TAB_APPLIS.

Egalement le traitement de chargement, par "chargement" il est entendu toutes les opérations à effectuer à partir du fichier d'entrée transféré depuis l'application opérationnelle pour obtenir les données selon l'architecture définie pour le système d'information, les deux étapes suivantes pouvant être distinguées :
- analyse de l'en-tête du fichier transféré; création IDCHAR dans TAB_CHAR avec mise à jour DATE_CHAR, VER_CHAR, DATE_DON, VER_DON.
- lecture de la description actuelle de l'application dans le métadictionnaire en terme d'indicateurs et d'axes à partir de TABIND et TAB_AXE (jointure IDAPPLI). Vérification avec les données du fichier entrant.

Comme cela a été précédemment dit, ce système d'information permet la consultation d'informations centralisées en provenance d'applications opérationnelles. Cependant il autorise également l'accès à des applications spécialisées, alimentées à partir d'applications opérationnelles. C'est à partir des données contenues dans des fichiers des applications hôtes qu'il est possible d'alimenter les indicateurs et les axes et de permettre une consultation standardisée des informations et un rapprochement entre certaines informations en provenance d'applications diverses.

De manière préférée, pour chaque application, les informations sont contenues dans un seul fichier physique appelé fichier d'entrée. Ce fichier se compose d'un en-tête de fichier et de la concaténation de plusieurs blocs séparés par une ligne commençant par un caractère prédéterminé , par exemple, "-----". Les lignes d'en-tête commencent toutes par le caractère "*". Chaque bloc comporte une partie réservée à un en-tête de bloc listant les informations contenues dans le bloc et présentant des commentaires éventuels. Le reste du bloc contient les enregistrements de données sous la forme indiquée en en-tête de fichier. Un bloc ne peut contenir qu'un seul type d'enregistrement. En outre, il est prévu dans le système d'information au moins un bloc par indicateur et de manière générale un bloc par axe.

Le fichier d'entrée présentera, par exemple la structure générale suivante :

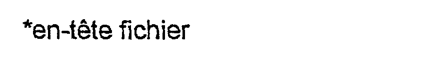

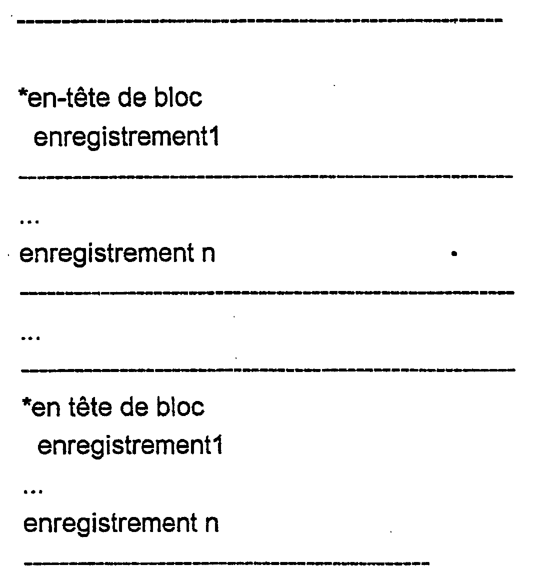

Les informations contenues dans l'en-tête d'un fichier ont pour objet de permettre une présentation générale dudit fichier. Elles concernent par exemple :
- le format du fichier (fichier de type enregistrement de format fixe ou fichier de type enregistrement de taille variable avec séparateur),
- le caractère séparateur,
- le type de fichier (données ou traitement d'anomalies),
- la personne ou le service à contacter en cas de problème,
- le type de machine ou de système origine,
- la période de validité des données.

Un certain nombre de mots clés et de paramètres sont utilisés tels que par exemple :
**FIXED** : Fichier de type enregistrement de format fixe sans séparateur.
**VARIABLE** : [(delimiters)]} : Fichier de type enregistrement de taille variable avec séparateur. Par défaut le caractère séparateur sera le point-virgule. Sinon, le caractère sera précisé dans la variable "délimiteurs".
**DATA :** Fichier de données.
**REVISION :** Correction d'un fichier précédent.
**DATE :** date de création du fichier sous le format DD-MM-YYYY.
**TRANSFERT :** date de transfert du fichier sous le format DD-MM-YYYY. Il s'agit de la date de transfert liée au calendrier fiscal.
**VALIDE** (spec_application) : Détermination de la période de validité du fichier.
**FROM** (string) :
   informations diverses
   - Personne ou service à contacter en cas de problème
   - type de machine ou système Origine
   - période de validité des données
   **COMMENT** string ;
   Commentaire libre limité à un certain nombre de caractères et terminé par ".". Ce commentaire correspond au message qui sera affiché lorsque l'utilisateur accédera aux données de l'application courante.

Les données contenues dans les blocs qui sont fournies par les applications sources se composent de plusieurs types d'informations: les informations génériques du chargement, les descriptifs des axes et les descripteurs des indicateurs par axe.

Les descriptifs des axes et des indicateurs se font dans les blocs. Deux types de blocs sont par conséquent utilisés : les blocs décrivant les axes et les blocs décrivant les indicateurs. En outre, les fichiers de données communiqués au système d'information doivent donner aussi bien la valeur des informations que les liens qui les relient entre elles. En effet, lorsqu'un utilisateur recherche une information, il peut le faire en fonction d'un ou plusieurs niveaux d'un axe et en fonction de plusieurs axes. Pour cela, pour chaque niveau d'un axe il faut un identifiant définissant de manière unique l'occurrence dudit niveau, cet identifiant ne pouvant être modifiable pendant toute la durée de vie de l'occurrence dans l'application source. De plus, les données fournies sont le plus proche possible des données contenues dans le métadictionnaire pour faciliter la consolidation.

Pour mieux appréhender l'idée de l'invention un exemple d'une application simple est ci-après discuté. Dans cet exemple, l'application concerne des liaisons routières par cars entre des villes de plusieurs départements ainsi que les tarifs de ces liaisons. L'analyse des besoins fait apparaître deux indicateurs qui sont les horaires et les tarifs et trois axes qui sont l'axe départ, l'axe arrivée et l'axe compagnie. L'axe départ peut, par exemple, se décomposer en deux niveaux, le niveau département et le niveau ville ; l'axe arrivée peut également se décomposer en deux niveaux identiques; le niveau département et le niveau ville et enfin l'axe compagnie n'a, par exemple, qu'un seul niveau, le nom de la compagnie.

De manière concrète, selon cet exemple d'application, le fichier d'entrée se présente de la manière suivante :
Bloc descriptif de l'axe "compagnie"
<num_compagnie>:<nom_compagnie>
Bloc descriptif de l'axe "départ"
<code_postal_départ>:<département_départ>:<num_ville_départ>:<nom_villle_ départ>
Bloc descriptif de l'axe "arrivée"
<code_postal_arrivée>:<département_arrivée>:<num_ville_arrivée>:<nom_ville _arrivée>
Bloc descriptif de l'indicateur "tarif"
<num_compagnie>: <code_postal_départ>: <num_ville_départ>::
<code_postal_arrivée>: <num_ville_arrivée>:<tarif>
Bloc descriptif de l'indicateur "horaires"
<num_compagnie>: <code_postal_départ>: <num_ville_départ>::
<code_postal_arrivée>: <num_ville_arrivée>:<horaires>

Le fichier de données de cet exemple d'application pourrait être alors le suivant :
* **VARIABLE** (:) **DATA**
* **DATE** 31-12-1992
* **TRANSFERT** 01-01-1993
* **VALIDE** (01-12-92 / 30-09-1992)
* **FROM (Mr DUPONT Tel 227-7777)**
* **COMMENT** une nouvelle liaison existe : Grenoble-> Seyssinet ;

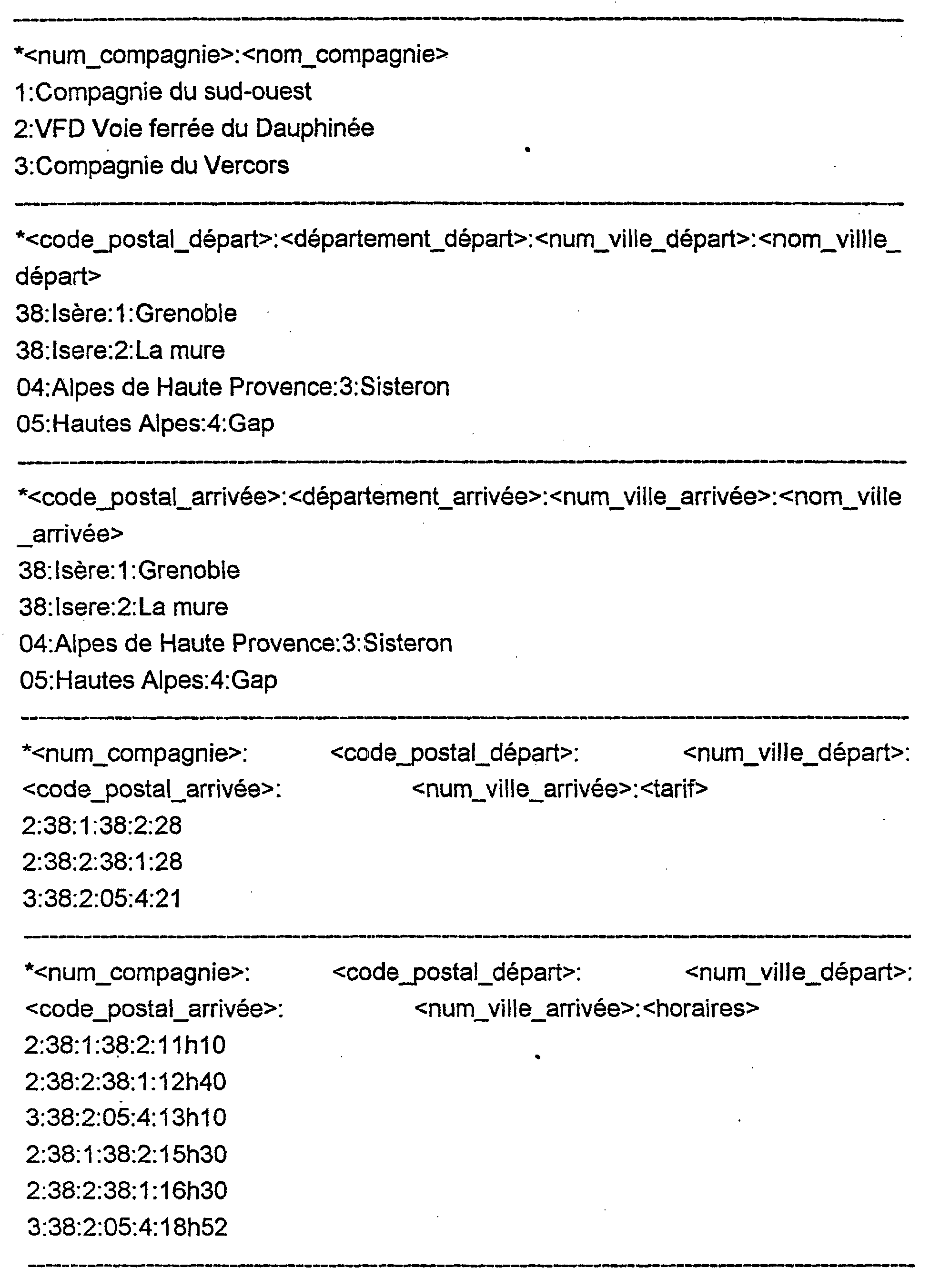

Pour conclure le serveur du système d'information constitue une base logique comprenant une pluralité d'applications regroupées en domaines. Chaque domaine est représenté comme un ensemble d'axes et d'indicateurs. Chacune des applications hôtes est donc traduite en terme d'axes et d'indicateurs et disparaît du niveau consultation assurant ainsi une totale indépendance relativement à l'application. Le métadictionnaire quant à lui comprend la définition logique de chacun des domaines déterminés, la définition des utilisateurs et de leurs droits s'appuyant sur ledit métadictionnaire.

## Revendications

1. Système d'information pour la consultation d'informations centralisées en provenance d'applications opérationnelles, composé d'un serveur et d'une pluralité de micro-ordinateurs émettant des requêtes vers le serveur qui comporte d'une part des données stockées sous forme de fichiers et d'autre part un métadictionnaire élaboré autour d'une pluralité de tables propres à la documentation et à l'administration du système, **caractérisé en ce que** les données sont organisées en domaines, sous domaines et fonctions et en ce qu'elles sont analysées selon un processus logique contenu dans le métadictionnaire matérialisé au moyen d'axes et d'indicateurs, un axe étant découpé en niveaux, la définition d'axes et de niveaux sur les axes permettant d'obtenir un ensemble de données, un indicateur représentant une mesure regroupant des données du même type parmi l'ensemble de données, le processus permettant au moment de la définition des données à importer dans le serveur, de créer, en plus des tables contenant les données, des tables complémentaires dites de consolidation pour autoriser une réponse générique à l'ensemble des requêtes effectuées sur les données et optimiser les performances d'accès.

2. Système d'information selon la revendication 1, **caractérisé en ce que** le métadictionnaire comprend les tables propres à chaque application, les informations générales concernant la gestion des domaines et des sous-domaines ainsi que la gestion des axes et des indicateurs, les informations liées au chargement et au transfert des applications, les éléments nécessaires à la construction automatique des requêtes de consultation, la gestion des utilisateurs et des droits des utilisateurs.

3. Système d'information selon la revendication 2, **caractérisé en ce que** sur chaque micro-ordinateur, il est présenté une interface graphique unique pour l'interrogation par l'utilisateur qui s'adapte automatiquement à tout type de données vues au travers du métadictionnaire et donc à la fonction choisie en présentant les axes et les indicateur(s) accessibles, le métadictionnaire assurant l'interface entre une requête exprimée en terme de domaines, sous-domaines, axes, niveaux et indicateurs et l'ensemble des données contenues dans le seveur.

4. Système d'information selon la revendication 3, dans lequel un axe minimal commun est construit dynamiquement par union d'au moins deux axes après comparaison et détection d'équivalence de niveaux des au moins deux axes autorisant ainsi des interrogations transversales au travers de domaines différents pour l'analyse de différents indicateurs par rapport aux différents axes communs auxdits différents indicateurs choisis eux-mêmes appartenant auxdits domaines différents.

5. Système d'information selon la revendication 4 dans lequel, pour chaque application les informations sont contenues dans un seul fichier physique se composant d'un en-tête et de la concaténation de plusieurs blocs séparés par une ligne commençant par un caractère prédéterminé, les lignes d'en-tête commençant toutes par un second caractère prédéterminé, chaque bloc comportant une partie réservée à un en-tête de bloc listant les informations contenues dans ledit bloc et présentant des commentaires éventuels, le reste du bloc contenant les enregistrements de données sous une forme indiquée en en-tête de fichier, un seul type d'enregistrement étant contenu dans un même bloc, alors qu'il est prévu, dans le système d'information, au moins un bloc par indicateur et un bloc par axe.

6. Procédé d'intégration d'une application opérationnelle dans un système d'information selon les revendications précédentes **caractérisé par** les étapes suivantes :
- identification du système opérant ou de la base opérationnelle amont avec prise de connaissance de l'administrateur et des droits des utilisateurs,
- identification des besoins et du type de requête des utilisateurs du système opérant,
- détermination des domaines, sous-domaines, axes, indicateurs et des règles de consolidation,
- préparation du serveur
tables réceptrices des données amont du système opérant,
enrichissement du métadictionnaire relativement au profil de l'utilisateur et à la définition des axes et des indicateurs,
construction des tables de consolidation selon les règles de consolidation.

## Claims

1. Information system for consulting centralised information originating from operational applications, composed of a server and a plurality of microcomputers that issue requests to the server, which contains on the one hand data stored in the form of files and, on the other hand, a metadictionary developed around a plurality of tables specific to the documentation and administration of the system, **characterised in that** the data are organised into domains, sub-domains and functions, and in that they are analysed according to a logical process contained in the metadictionary, embodied by axes and indicators, one axis being split into levels, the definition of the axes and levels on the axes making it possible to obtain a set of data, an indicator representing a measurement combining data of the same type among the set of data, the process making it possible to create, at the time that the data to be imported into the server are defined, in addition to tables containing the data, additional tables called consolidation tables for permitting a generic response to all the requests made for the data and to optimise access performance.

2. Information system according to Claim 1, **characterised in that** the metadictionary comprises tables specific to each application, general information about the management of the domains and sub-domains and the management of the axes and indicators, information linked with the loading and transfer of applications, the elements needed for the automatic construction of consultation requests, user management and user rights.

3. Information system according to Claim 2, **characterised in that** on each microcomputer there is a unique graphical interface for interrogation by the user, which adapts automatically to any type of data viewed through the metadictionary and hence to the function chosen by presenting the axes and indicator(s) that are accessible, the metadictionary providing the interface between a request expressed in terms of domains, sub-domains, axes, levels and indicators and the set of data contained in the server.

4. Information system according to Claim 3, in which a common minimum axis is constructed dynamically by combining at least two axes after comparison and detection of equivalence of levels in at least two axes, thus permitting cross-interrogation over different domains for analysing different indicators relating to the different axes common to said different chosen indicators, themselves belonging to said different domains.

5. Information system according to Claim 4 in which, for each application, the information is contained in a single physical file composed of a header and the chaining together of several blocks separated by a line starting with a predetermined character, the header lines all starting with a second predetermined character, each block having a portion reserved for a block header listing the information contained in said block and optionally containing comments, the rest of the block containing records of data in a form indicated in the file header, a single type of record being contained in any one block, while provision is made in the information system for at least one block per indicator and one block per axis.

6. Method of integrating an operational application into an information system according to the preceding claims, **characterised by** the following steps:
- identifying the operating system or the operational base upstream, with acknowledgement of the administrator and of the user rights;
- identifying the needs and the type of request from users of the operating system;
- determining the domains, sub-domains, axes, indicators and consolidation rules;
- preparing the server,
tables receiving data upstream of the operating system;
enriching the metadictionary relative to the user profile and to the definition of axes and indicators;
constructing consolidation tables according to the consolidation rules.

## Patentansprüche

1. Informationssystem für die Abfrage von von operationalen Anwendungen stammenden zentralisierten Informationen, das aus einem Server und aus mehreren Mikrorechnern aufgebaut ist, welche Anfragen an den Server senden, der einerseits in Form von Dateien gespeicherte Daten und andererseits ein Metawörterbuch, das um mehrere Tabellen für die Dokumentation und die Verwaltung des Systems erstellt ist, enthält, **dadurch gekennzeichnet, daß** die Daten in Domänen, Unterdomänen und Funktionen organisiert sind und daß sie gemäß einem in dem Metawörterbuch enthaltenen Logikprozeß analysiert werden, der mittels Achsen und Indikatoren verwirklicht ist, wobei eine Achse in Niveaus unterteilt ist, wobei die Definition der Achsen und der Niveaus auf den Achsen ermöglicht, eine Gesamtheit von Daten zu erhalten, wobei ein Indikator ein Maß repräsentiert, das Daten desselben Typs aus der Gesamtheit der Daten zusammenfaßt, und wobei der Prozeß zum Zeitpunkt der Definition der in den Server zu importierenden Daten ermöglicht, zusätzlich zu den die Daten enthaltenden Tabellen komplementäre sogenannte Konsolidierungstabellen zu erzeugen, um eine übergeordnete Antwort auf die Gesamtheit der Anfragen, die an den Daten erfolgen, zuzulassen und um die Zugriffsleistung zu optimieren.

2. Informationssystem nach Anspruch 1, **dadurch gekennzeichnet, daß** das Metawörterbuch Tabellen, die jeder Anwendung eigentümlich sind, allgemeine Informationen, die die Verwaltung der Domänen und der Unterdomänen sowie die Verwaltung der Achsen und der Indikatoren betreffen, Informationen, die mit der Belastung und der Übertragung der Anwendungen in Beziehung stehen, die für die automatische Konstruktion der Abfrageanfragen notwendigen Elemente, die Verwaltung der Anwender und die Anwenderrechte umfaßt.

3. Informationssystem nach Anspruch 2, **dadurch gekennzeichnet, daß** es in jedem Mikrorechner eine eindeutige graphische Schnittstelle für die Abfrage durch den Anwender aufweist, die sich automatisch an jeden Datentyp, der über das Metawörterbuch betrachtet wird, und daher an die Funktion, die bei der Darstellung der verfügbaren Achsen und Indikatoren gewählt wird, anpaßt, wobei das Metawörterbuch die Schnittstelle zwischen einer Anfrage, die anhand von Domänen, Unterdomänen, Achsen, Ebenen und Indikatoren angegeben wird, und der Gesamtheit der im Server enthaltenen Daten sicherstellt.

4. Informationssystem nach Anspruch 3, in dem durch Vereinigung wenigstens zweier Achsen nach einem Vergleich und der Erfassung der Äquivalenz von Niveaus der wenigstens zwei Achsen eine gemeinsame minimale Achse dynamisch konstruiert wird, wodurch transversale Abfragen durch verschiedene Domänen für die Analyse verschiedener Indikatoren in bezug auf verschiedene Achsen, die den verschiedenen gewählten Indikatoren gemeinsam sind, die ihrerseits verschiedenen Domänen zugehören, zugelassen werden.

5. Informationssystem nach Anspruch 4, in dem für jede Anwendung die Informationen in einer einzigen physikalischen Datei enthalten sind, die sich aus einem Kopfteil und aus der Verknüpfung mehrerer getrennter Blöcke durch eine Linie, die mit einem vorgegebenen Zeichen beginnt, gebildet ist, wobei die Linien des Kopfes alle mit einem zweiten vorgegebenen Zeichen beginnen, wobei jeder Block einen einem Blockkopf vorbehaltenen Teil aufweist, in dem die in dem Block enthaltenen Informationen aufgelistet sind und der eventuelle Kommentare enthält, wobei der restliche Block die Datenaufzeichnungen in einer im Kopf der Datei angegebenen Form enthält, wobei im selben Block ein einziger Aufzeichnungstyp enthalten ist, während im Informationssystem wenigstens ein Block pro Indikator und ein Block pro Achse vorgesehen sind.

6. Verfahren zum Integrieren einer operationalen Anwendung in ein Informationssystem nach den vorhergehenden Ansprüchen, **gekennzeichnet durch** die folgenden Schritte:
- Identifizieren des laufenden Systems oder der vorausgehenden operationalen Basis mit Kenntnisnahme des Administrators und der Anwenderrechte,
- Identifizieren der Bedürfnisse und des Typs der Anfrage der Anwender des laufenden Systems,
- Bestimmen der Domänen, der Unterdomänen, der Achsen, der Indikatoren und der Konsolidierungsregeln,
- Vorbereiten des Servers
Empfangstabellen und vorausgehende Daten des laufenden Systems,
Hinzufügen des Anwenderprofils und der Definition der Achsen und der Indikatoren zum Metawörterbuch,
Konstruieren der Konsolidierungstabellen gemäß den Konsolidierungsregeln.
